# EUROPÄISCHE PATENTSCHRIFT

(11) **EP 2 939 445 B1**
(45) Veröffentlichungstag und Bekanntmachung des Hinweises auf die Patenterteilung: **13.11.2019**
(21) Anmeldenummer: 13814527.1
(22) Anmeldetag: 19.12.2013
(51) Int. Cl.: H04S 5/00

(54) **ERZEUGUNG VON 3D-AUDIOSIGNALEN**
PRODUCTION OF 3D AUDIO SIGNALS
PRODUCTION DE SIGNAUX AUDIO 3D

(30) Priorität: 27.12.2012 DE 102012224454
(43) Veröffentlichungstag der Anmeldung: 04.11.2015
(73) Patentinhaber: Sennheiser electronic GmbH & Co. KG, 30900 Wedemark (DE)
(72) Erfinder: ZIELINSKY, Gregor, 30163 Hannover (DE)
(74) Vertreter: Eisenführ Speiser
(86) Internationale Anmeldenummer: PCT/EP2013/077293
(87) Internationale Veröffentlichungsnummer: WO 2014/102129

(56) Entgegenhaltungen:
- US-A1- 2004 190 727
- US-A1- 2012 070 011
- THEILE GUENTHER ET AL: "Principles in Surround Recordings with Height", AES CONVENTION 130; MAY 2011, AES, 60 EAST 42ND STREET, ROOM 2520 NEW YORK 10165-2520, USA, 13. Mai 2011 (2011-05-13), XP040567418,
- GREGORY PALLONE: "Description of Orange's 3D listening room and contents", 101. MPEG MEETING; 16-7-2012 - 20-7-2012; STOCKHOLM; (MOTION PICTURE EXPERT GROUP OR ISO/IEC JTC1/SC29/WG11),, Nr. m25964, 11. Juli 2012 (2012-07-11), XP030054299,
- "Auro-3D Creating a new dimension in sound", , 18. Oktober 2011 (2011-10-18), XP055142680, Gefunden im Internet: URL:http://www.barco.com/projection_system s/downloads/BR_Auro-3D_Oct11_LR.pdf [gefunden am 2014-09-25]
- Geoff Martin: "Interchannel Interference at the Listening Position in a Five-channel Loudspeaker Configuration", Audio Engineering Society Convention Paper, 8. Oktober 2002 (2002-10-08), XP055140480, Gefunden im Internet: URL:http://www.aes.org/tmpFiles/elib/20140 916/11296.pdf [gefunden am 2014-09-16]
- LEE ET AL: "The Relationship Between Interchannel Time and Level Differences in Vertical Sound Localization and Masking", AES CONVENTION 131; OCTOBER 2011, AES, 60 EAST 42ND STREET, ROOM 2520 NEW YORK 10165-2520, USA, 19. Oktober 2011 (2011-10-19), XP040567630, in der Anmeldung erwähnt
- WOSZCZYK WIESLAW ET AL: "Spatial Sound Design Tool for 22.2 Channel 3-D Audio Productions, with Height", AES CONVENTION 133; 20121001, AES, 60 EAST 42ND STREET, ROOM 2520 NEW YORK 10165-2520, USA, 25 October 2012 (2012-10-25), XP040574804,

## Beschreibung

Die vorliegende Erfindung betrifft eine Vorrichtung zur Erzeugung von 3D-Audiosignalen aus Aufnahmen, welche für eine 2D-Audio-Wiedergabe vorgesehen sind.

Die Aufzeichnung von Audiosignalen, bei deren Wiedergabe ein räumlicher Eindruck vermittelt werden soll, erfolgt typischerweise durch die Erfassung mehrerer Richtungs-Audiosignale, die jeweils einer räumlichen Richtung zugeordnet sind. Bei einem Stereo-Signal besteht die Aufnahme beispielsweise aus einem Richtungs-Audiosignal "links" und einem Richtungs-Audiosignal "rechts". Ebenfalls üblich ist das 5.1-System, bei dem fünf Richtungs-Audiosignale aufgezeichnet werden, die von einem Zuhörer aus gesehen den Richtungen "vorne links", "vorne rechts", "vorne mittig", "hinten links" und "hinten rechts" zugeordnet sind. Hinzu kommt hierbei ein Subwoofer-Audiosignal, dessen Frequenzen so niedrig gewählt werden, dass der Ort bzw. die Richtung der Wiedergabe von einem Zuhörer nicht wahrgenommen werden kann. Weitere Anordnungen mit einer unterschiedlichen Anzahl von aufgezeichneten Richtungs-Audiosignalen sind üblich. Solche Verfahren, bei denen die Richtungen, die jeweils einem aufgezeichneten Richtungs-Audiosignal zugeordnet sind, alle auf einer Höhe bezüglich einem Zuhörer angeordnet sind, werden inzwischen als 2D-Audiosysteme bezeichnet, da die den einzelnen Richtungs-Audiosignalen zugeordneten Richtungen alle in einer Ebene liegen und somit eine zweidimensionale Anordnung zugrunde liegt.

Als Erweiterung gegenüber 2D-Audiosystemen wurden inzwischen sogenannte 3D-Audiosysteme definiert. Auch hierbei wird eine Mehrzahl von Richtungs-Audiosignalen aufgezeichnet. Neben den Richtungen in einer Ebene werden hier jedoch auch Richtungs-Audiosignale für Richtungen erfasst, die auf unterschiedlichen Höhen bezüglich des Zuhörers angeordnet sind. So können z.B. bei einem 3D-Audiosystem als 9.1-System ergänzend zu dem 5.1-System Richtungs-Audiosignale für die Richtungen "vorne oben links", "vorne oben rechts", "hinten oben links" und "hinten oben rechts" aufgezeichnet werden. Die Berücksichtigung der Höhe führt dazu, dass eine dritte Dimension der Richtung genutzt wird und somit eine dreidimensionale Anordnung zugrunde liegt, was die Bezeichnung als 3D-Audiosystem begründet.

EP 1 240 805 B1 zeigt mögliche Anordnungen für 3D-Audiosysteme sowie ein Verfahren zur Erzeugung von 3D-Audioaufnahmen, welche die zugehörige Anzahl von Richtungs-Audiosignalen enthalten. Entsprechende Wiedergabesysteme werden z.B. unter den Namen "Auro 3D" oder "Dolby Pro Logic IIz" vertrieben. US20040190727 beschreibt ein 3D Audiosystem bei dem hohe Frequenzen der oberen Lautsprecher verzögert werden, um einen Höheneffekt zu erzeugen.

In der prioritätsbegründenden deutschen Anmeldung hat das Deutsche Patent- und Markenamt die folgenden Dokumente zitiert: LEE, H.: The Relationship Between Interchannel Time and Level Differences in Vertical Sound Localization and Masking. In: Audio Engineering Society, Convention Paper, Presented at the 131st Convention, 2011 October 20-23, New York, NY, USA; WALTHER, A. et al.: Direct-ambient decomposition and upmix of surround signals. In: 2011 IEEE Workshop on Applications of Signal Processing to Audio and Acoustics. October 16-19, 2011; WOSZCZYK, W. et al.: Spatial Enhancement of Audio Recordings. In: Audio Engineering Society, Convention Paper, Presented at the 133rd Convention, 2012 October 26-29, San Francisco, USA.

Für den Betrieb von 3D-Audio-Wiedergabesystemen stellt sich das Problem, dass die meisten verfügbaren Audioaufnahmen in 2D-Audioaufnahmetechnik erzeugt wurden. Somit sind die für eine 3D-Audiowiedergabe notwendigen Richtungs-Audiosignale, welche einer anderen Höhe zugeordnet sind, nicht enthalten. Um trotzdem ein 3D-Audio-Wiedergabesystem mit 2D-Audioaufnahmen zu betreiben, können jene Lautsprecher, die auf einer anderen Höhe angebracht sind, beispielsweise einfach mit einem Richtungs-Audiosignal versorgt werden, das für die Wiedergabe in der Ebene des Zuhörers gedacht ist. Der erwünschte räumliche 3D-Audioeffekt ergibt sich so jedoch nicht.

Um trotzdem einen räumlichen Klangeindruck zu erzeugen, können die fehlenden Richtungs-Audiosignale mit einer zusätzlichen Audio-Verarbeitung aus den vorhandenen Richtungs-Audiosignalen abgeleitet werden. Gemäß dem Stand der Technik wird der räumliche Eindruck dabei meist vorwiegend durch Zufügung von Hall-Effekten zu allen Richtungs-Audiosignalen erzeugt. Ein System, das diesen Ansatz umsetzt, wird beispielsweise unter dem Namen "Audyssey" vertrieben. Es entsteht dabei zwar ein räumliches Klangbild, jedoch erzeugt der Hall den Eindruck eines eigenen Raumes, der im Allgemeinen nicht dem Raum entspricht, in dem sich der Nutzer befindet. Der akzentuierte Einsatz von Hall kann je nach Anordnung und Raum zudem zu Phasenproblemen führen, was sich durch frequenzabhängige Auslöschungen bzw. sogar durch Kammfiltereffekte bemerkbar macht. Der Klang wirkt daher oft unnatürlich oder sogar verfälscht.

Es ist die Aufgabe der vorliegenden Erfindung, vorhandene stereo- oder 5.1-Audiosignale in eine möglichst natürliche und unverfälschte 3D-Audiowiedergabe zu überführen, sodass sich für einen Zuhörer ein überzeugender räumlicher 3D-Audioeffekt ergibt.

Diese Aufgabe wird durch eine Vorrichtung gemäß Anspruch 1 gelöst.

Somit wird eine Vorrichtung vorgesehen, welche die verfügbaren Richtungs-Audiosignale aus einem 2D-Audiosignal als Eingangssignale verwendet und die aus diesen die notwendigen Richtungs-Audiosignale für eine 3D-Audiowiedergabe erzeugt. Der erfinderische Gedanke besteht insbesondere in der Berücksichtigung psychoakustischer Effekte. Durch einen zielgerichteten Einsatz von Signalverzögerungen, frequenzabhängigen Amplitudenanpassungen und einen beschränkten Einsatz von Halleffekten in Verbindung mit einer gezielt asymmetrischen Verarbeitung wird der gewünschte räumliche 3D-Audioeffekt ohne die beim Stand der Technik auftretenden Nachteile erzeugt.

Gemäß einem Aspekt der vorliegenden Erfindung verfügt die Vorrichtung über mindestens zwei Eingänge zum Empfangen von Eingangssignalen und über mindestens neun Ausgängen zur Ausgabe von Richtungs-Audiosignalen, die aus Sicht eines Zuhörers den Richtungen "vorne links", "vorne rechts", "vorne mittig, "hinten links", "hinten rechts", "vorne oben links", "vorne oben rechts", "hinten oben links" und "hinten oben rechts" zugeordnet sind. Die Vorrichtung verfügt weiterhin über Filter und Verzögerungsglieder. Die Richtungs-Audiosignale für die Richtungen "vorne oben" werden in der Vorrichtung mit einem Hochpassfilter bearbeitet, die Richtungs-Audiosignale für die Richtungen "vorne" mit einem Tiefpassfilter, und die Richtungs-Audiosignale für die Richtungen "hinten oben" mit einem asymmetrischen Stereo-Hall. Die Verzögerungsglieder dienen dazu, eine zeitliche Verzögerung der Signale zu erzeugen, sodass die Signale zuerst "vorne oben", dann mit einem bestimmten zeitlichen Verzug "vorne", dann mit einem größeren zeitlichen Verzug "hinten" und dann mit einem noch größeren zeitlichen Verzug "hinten oben" ausgegeben werden.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1: zeigt die schematische Darstellung einer Stereo-Wiedergabeanordnung gemäß dem Stand der Technik,
- Fig. 2: zeigt die schematische Darstellung einer 5.1 Surround-Wiedergabeanordnung gemäß dem Stand der Technik,
- Fig. 3: zeigt die schematische Darstellung einer 9.1 3D-Audio-Wiedergabeanordnung gemäß dem Stand der Technik,
- Fig. 4: zeigt das Blockschaltbild einer Anordnung zur Erzeugung der Richtungs-Audiosignale für ein 3D-Audio-Wiedergabesystem gemäß einem ersten Ausführungsbeispiel,
- Fig. 5: zeigt den Frequenzgang eines Filters nach Betrag und Phase, welches gemäß dem ersten Ausführungsbeispiel zur Erzeugung eines Richtungs-Audiosignals für die Richtung "vorne mittig" dient,
- Fig. 6: zeigt den Frequenzgang eines Filters nach Betrag und Phase, welches gemäß dem ersten Ausführungsbeispiel zur Erzeugung eines Richtungs-Audiosignals für die Richtung "vorne oben links" bzw. "vorne oben rechts" dient,
- Fig. 7: zeigt den Frequenzgang eines Filters nach Betrag und Phase, welches gemäß dem ersten Ausführungsbeispiel zur Erzeugung eines Richtungs-Audiosignals für die Richtung "vorne links" bzw. "vorne rechts" dient,
- Fig. 8: zeigt den Frequenzgang eines Filters nach Betrag und Phase, welches gemäß dem ersten Ausführungsbeispiel zur Erzeugung eines Richtungs-Audiosignals für die Richtung "hinten oben links" dient,
- Fig. 9: zeigt den Frequenzgang eines Filters nach Betrag und Phase, welches gemäß dem ersten Ausführungsbeispiel zur Erzeugung eines Richtungs-Audiosignals für die Richtung "hinten oben rechts" dient,
- Fig. 10: zeigt den Frequenzgang eines Filters nach Betrag und Phase, welches gemäß dem ersten Ausführungsbeispiel zur Erzeugung eines Richtungs-Audiosignals für die Richtung "hinten links" bzw. "hinten rechts" dient,
- Fig. 11: zeigt eine schematische Übersicht des Ablaufs der Erzeugung der Richtungs-Audiosignale gemäß dem ersten Ausführungsbeispiel und
- Fig. 12: zeigt das Blockschaltbild einer Anordnung zur Erzeugung der Richtungs-Audiosignale für ein 3D-Audio-Wiedergabesystem gemäß einem zweiten Ausführungsbeispiel.

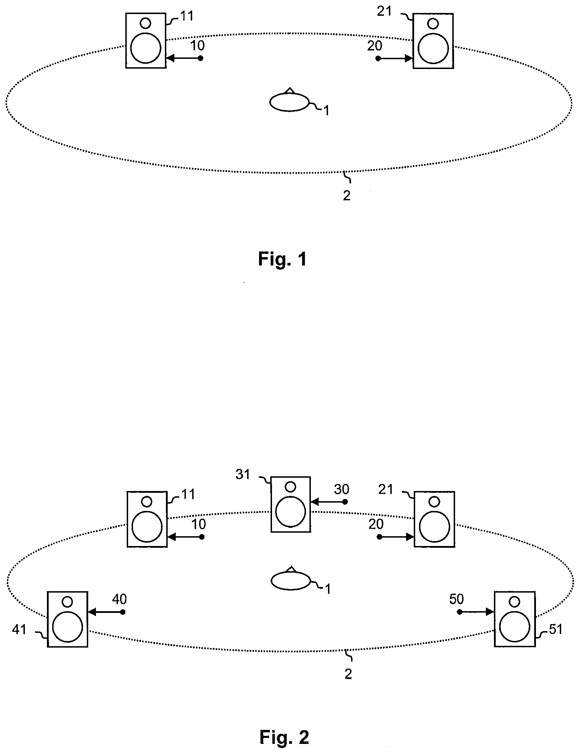

Fig. 1 zeigt die schematische Darstellung einer Stereo-Wiedergabeanordnung gemäß dem Stand der Technik. In der Mitte befindet sich der Zuhörer 1. Die Ellipse 2 deutet die perspektivische Darstellung eines Kreises an, in dessen Mitte sich der Zuhörer 1 befindet und der die Ebene definiert, in der sich der Kopf des Zuhörers befindet. In dieser Ebene befinden sich ein erster Lautsprecher 11 und ein zweiter Lautsprecher 21. Die Anordnung der Lautsprecher ist in Verbindung mit der bevorzugten Blickrichtung von Zuhörer 1 so vorgesehen, dass der erste Lautsprecher 11 sich vom Zuhörer aus in der Richtung "vorne links" befindet und der zweite Lautsprecher 21 in der Richtung "vorne rechts". Der erste Lautsprecher 11 dient zur Wiedergabe eines Richtungs-Audiosignals 10, das bei der in Fig. 1 gezeigten Stereo-Anordnung dem linken Kanal des Stereo-Audiosignals entspricht. Der zweite Lautsprecher 21 dient zur Wiedergabe eines Richtungs-Audiosignals 20, das bei der in Fig. 1 gezeigten Stereo-Anordnung dem rechten Kanal des Stereo-Audiosignals entspricht.

Fig. 2 zeigt die schematische Darstellung einer 5.1 Surround-Wiedergabeanordnung gemäß dem Stand der Technik. Alle Elemente aus Fig. 1 sind auch in dieser Anordnung enthaltenen. In der Ebene des Zuhörers befindet sich zusätzlich ein dritter Lautsprecher 31, der vom Zuhörer 1 aus gesehen in der Richtung "vorne mittig" angeordnet ist. Er dient zur Wiedergabe eines Richtungs-Audiosignals 30, das der Richtung "vorne mittig" zugeordnet ist. Des Weiteren befindet sich in der Ebene des Zuhörers ein vierter Lautsprecher 41, welcher zur Wiedergabe eines Richtungs-Audiosignals 40 aus der Richtung "hinten links" dient, sowie ein fünfter Lautsprecher 51, welcher zur Wiedergabe eines Richtungs-Audiosignals 50 aus der Richtung "hinten rechts" dient. Das in Fig. 1 bis 3 einheitlich verwendete Symbol für einen Lautsprecher soll keine Information über die Ausrichtung eines Lautsprechers anzeigen, in die der Lautsprecher sein Schallsignal überwiegend abstrahlt. In einem realen Aufbau sind die Lautsprecher normalerweise im Wesentlichen in Richtung des Zuhörers 1 ausgerichtet. Der zusätzlich bei einer 5.1 Surround-Anordnung vorgesehene Subwoofer ist in Fig. 2 nicht dargestellt, da seine Position und Richtung aufgrund der Frequenzbeschränkung des zugehörigen Signals vom Zuhörer nicht wahrgenommen wird.

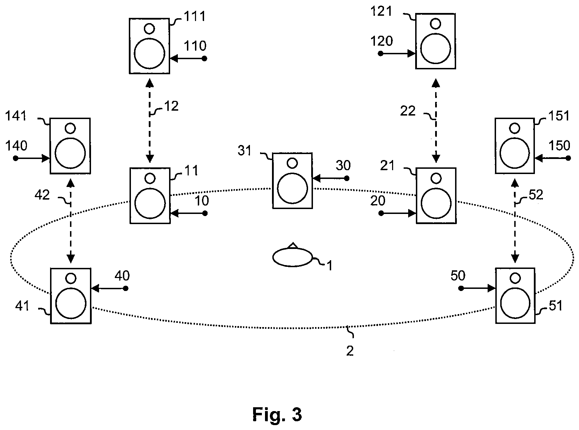

Fig. 3 zeigt die schematische Darstellung einer 9.1 3D-Audio-Wiedergabeanordnung gemäß dem Stand der Technik. Alle Elemente aus Fig. 2 sind auch in dieser Anordnung enthaltenen. Hinzu kommen mehrere Lautsprecher, die sich oberhalb der Ebene des Zuhörers befinden. Ein sechster Lautsprecher 111 ist in einem Abstand 12 oberhalb des ersten Lautsprechers 11 angeordnet und dient zur Wiedergabe eines Richtungs-Audiosignals 110 aus der Richtung "vorne oben links". Ein siebter Lautsprecher 121 ist in einem Abstand 22 oberhalb des zweiten Lautsprechers 21 angeordnet und dient zur Wiedergabe eines Richtungs-Audiosignals 120 aus der Richtung "vorne oben rechts". Ein achter Lautsprecher 141 ist in einem Abstand 42 oberhalb des vierten Lautsprechers 41 angeordnet und dient zur Wiedergabe eines Richtungs-Audiosignals 140 aus der Richtung "hinten oben links". Ein neunter Lautsprecher 151 ist in einem Abstand 52 oberhalb des fünften Lautsprechers 51 angeordnet und dient zur Wiedergabe eines Richtungs-Audiosignals 150 aus der Richtung "hinten oben rechts". Wie bei der 5.1 Surround-Anordnung aus Fig. 2 ist auch in Fig. 3 der zusätzlich zur 9.1 3D-Audio-Wiedergabeanordnung zugehörige Subwoofer aus dem gleichen Grunde nicht dargestellt.

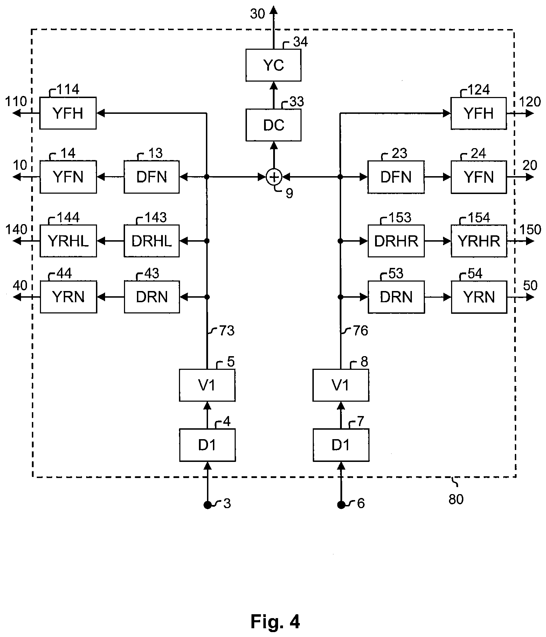

Fig. 4 zeigt das Blockschaltbild einer Anordnung zur Erzeugung der Richtungs-Audiosignale für ein 3D-Audio-Wiedergabesystem gemäß einem ersten Ausführungsbeispiel. Als Eingang dient bei diesem ersten Ausführungsbeispiel ein Stereo-Audiosignal. Ein erstes Eingangssignal 3 entspricht dabei dem Signal des linken Stereo-Kanals und ein zweites Eingangssignal 6 entspricht dem Signal des rechten Stereo-Kanals. Aus diesen beiden Eingangssignalen sollen die 9 Richtungs-Audiosignale 10, 20, 30, 40, 50, 110, 120, 140 und 150 erzeugt werden. Dieser Vorgang, bei dem aus einer kleineren Anzahl von Eingangssignalen eine größere Anzahl von Ausgangssignalen erzeugt wird, wird als "Upmix" bezeichnet. Vorzugsweise wird der Upmix in einer Vorrichtung 80 durchgeführt, welche die verfügbaren Kanäle aus einem 2D-Audiosignal als Eingangssignale erhält und die 9 Richtungs-Audiosignale 10, 20, 30, 40, 50, 110, 120, 140 und 150 ausgibt. Die Signalverarbeitung in der Vorrichtung 80 wird vorzugsweise digital durchgeführt. Sofern nur ein Mono-Audiosignal zur Verfügung steht, so kann dieses gleichzeitig sowohl für das Eingangssignal 3 als auch für das Eingangssignal 6 verwendet werden.

Das erste Eingangssignal 3 durchläuft optional zunächst ein Verzögerungsglied 4 und wird optional durch das Verstärkungsglied 5 in seiner Amplitude verändert, wobei ein Zwischensignal 73 erzeugt wird. Entsprechend durchläuft das zweite Eingangssignal 6 optional zunächst ein Verzögerungsglied 7 und wird optional durch das Verstärkungsglied 8 in seiner Amplitude verändert, wobei ein Zwischensignal 76 erzeugt wird. Die Verzögerungsglieder 4 und 7 erzeugen eine gleiche Verzögerung D1. Die Verstärkungslieder 5 und 8 erzeugen eine gleiche Verstärkung V1. Sowohl die Verzögerungsglieder 4 und 7 als auch die Verstärkungsglieder 5 und 8 sind für die Umsetzung des erfindungsgemäßen Upmix' nicht erforderlich. Da jedoch die internen Signale der Vorrichtung 80 normalerweise nicht zur Messung zur Verfügung stehen, beeinflusst das Vorhandensein dieser Glieder das Ein-/Ausgangsverhalten der Vorrichtung 80. Die im Folgenden beschriebene Signalverarbeitung ist daher so zu verstehen, dass sich eine Verzögerung D1 und eine Verstärkung V1 angeben lassen, sodass sich das erfindungsgemäß vorgesehene Übertragungsverhalten ergibt. Bevorzugt hat die Verzögerung D1 aber den Wert 0 ms und die Verstärkung V1 den Wert 1, sodass das erste Zwischensignal 73 mit dem ersten Eingangssignal 3 identisch ist und das zweite Zwischensignal 76 mit dem zweiten Eingangssignal 6 identisch ist.

Das Richtungs-Audiosignal 30 ("vorne mittig") wird durch Summierung des Zwischensignals 73 und des Zwischensignals 76 am Summierer 9 sowie durch ein Verzögerungsglied 33 und ein damit in Reihe angeordnetes Filter 34 erzeugt.

Das Richtungs-Audiosignal 110 ("vorne oben links") wird aus dem Zwischensignal 73 über ein Filter 114 erzeugt.

Das Richtungs-Audiosignal 120 ("vorne oben rechts") wird aus dem Zwischensignal 76 über ein Filter 124 erzeugt.

Das Richtungs-Audiosignal 10 ("vorne links") wird aus dem Zwischensignal 73 über ein Verzögerungsglied 13 und ein damit in Reihe angeordnetes Filter 14 erzeugt.

Das Richtungs-Audiosignal 20 ("vorne rechts") wird aus dem Zwischensignal 76 über ein Verzögerungsglied 23 und ein damit in Reihe angeordnetes Filter 24 erzeugt.

Das Richtungs-Audiosignal 140 ("hinten oben links") wird aus dem Zwischensignal 73 über ein Verzögerungsglied 143 und ein damit in Reihe angeordnetes Filter 144 erzeugt.

Das Richtungs-Audiosignal 150 ("hinten oben rechts") wird aus dem Zwischensignal 76 über ein Verzögerungsglied 153 und ein damit in Reihe angeordnetes Filter 154 erzeugt.

Das Richtungs-Audiosignal 40 ("hinten links") wird aus dem Zwischensignal 73 über ein Verzögerungsglied 43 und ein damit in Reihe angeordnetes Filter 44 erzeugt.

Das Richtungs-Audiosignal 50 ("hinten rechts") wird aus dem Zwischensignal 76 über ein Verzögerungsglied 53 und ein damit in Reihe angeordnetes Filter 54 erzeugt.

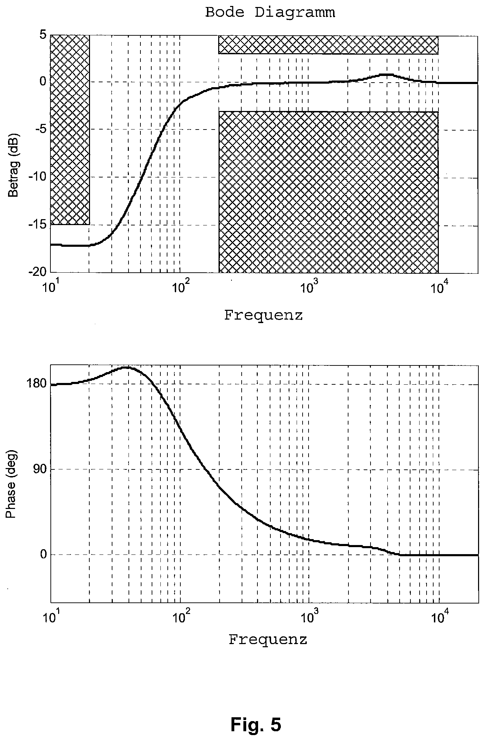

Der erfinderische Schritt liegt in der konkreten Ausgestaltung der in der Vorrichtung 80 enthaltenen Verzögerungsglieder und Filter. In Fig. 5 bis Fig. 10 sind Frequenzgänge von Filtern nach Betrag und Phase dargestellt, welche in einer bevorzugten erfindungsgemäßen Ausführungsform in der Vorrichtung 80 zum Einsatz kommen. Für den jeweils in der unteren Hälfte von Fig. 5 bis Fig. 10 dargestellten Phasengang wurden die zugehörigen Filter so normiert, dass sie auf ein von Null verschiedenes Eingangssignal jeweils ohne Verzögerung mit einem von Null verschiedenen Ausgangssignal reagieren. Eine Verzögerung der Reaktion des Filters ist in dieser Darstellung also nicht enthalten. Die in Fig. 4 vorgesehenen Verzögerungen werden in dieser Darstellung somit ausschließlich den in der Vorrichtung 80 enthaltenen Verzögerungsgliedern zugeschlagen. In einer realen Anordnung können die Verzögerungen aber durchaus als Teil eines Filters realisiert werden. Für die erfindungsgemäße Umsetzung kommt es darauf an, dass das messbare Übertragungsverhalten vom jeweiligen Eingangssignal zum jeweiligen ausgegebenen Richtungs-Audiosignal durch eine Reihenschaltung der beteiligten Verzögerungsglieder und Filter darstellbar ist.

Die in Fig. 5 bis Fig. 10 dargestellten Frequenzgänge in Verbindung mit speziellen Werten für die Verzögerungsglieder sind das Ergebnis von speziell angepassten Upmix-Algorithmen. Diese Upmix-Algorithmen basieren auf zuvor nicht eingesetzten, psychoakustisch wirkenden Kombinationen aus Predelays, Delays, phasenlinearen Filtern, Röhrensimulationen, Multiband-Kompressoren, überkreuzten Signalroutings sowie minimalen Hallanteilen. Um einen möglichst natürlichen Klangeindruck zu erzeugen, sind die Hallanteile auf ein möglichst wenig wahrnehmbares Maß reduziert. An geeigneter Stelle vorgesehene minimale Vorverzögerungen dienen zur Vermeidung von Kammfiltereffekten zwischen den von den einzelnen Lautsprechern abgegebenen Schallsignalen. Die fertigen Algorithmen können in Form von Raumfaltungen angeboten werden. Optional kann die Realisierung der Filter in der digitalen Form als FIR-Filter erfolgen.

Fig. 5 zeigt den Frequenzgang eines Filters nach Betrag und Phase, welches gemäß dem ersten Ausführungsbeispiel zur Erzeugung eines Richtungs-Audiosignals für die Richtung "vorne mittig" dient. Der in Fig. 5 dargestellte Frequenzgang gehört zu dem Filter 34 und beschreibt seine Übertragungsfunktion YC. Der in der oberen Hälfte von Fig. 5 über der Frequenz dargestellte Betragsverlauf zeigt, dass Frequenzen unterhalb von 20 Hz um mindestens 15 dB abgeschwächt werden. Im Frequenzbereich von 20 Hz bis 200 Hz steigt der Betrag mit steigender Frequenz an. Von 200 Hz bis 10 kHz liegt der Betrag in einem Bereich zwischen -3 dB und +3 dB. Vorzugsweise liegt der Betrag in diesem Frequenzbereich um 0 dB, wobei bei einer Frequenz von 4 kHz eine Erhöhung auf +1 dB enthalten ist. Insgesamt zeigt das Filter 34 damit ein Hochpassverhalten, wobei die Eckfrequenz ca. 100 Hz beträt. Der in der unteren Hälfte von Fig. 5 dargestellte Verlauf der Phase über der Frequenz nähert sich für Frequenzen über 1 kHz mit steigender Frequenz dem Wert 0° an. Hieran ist zu erkennen, dass das Filter 34 keine Hall-Anteile enthält, die mit steigender Frequenz zu einem stark in den negativen Bereich gehenden Phasenverlauf führen würden.

Das Verzögerungsglied 33 führt eine Verzögerung DC im Bereich von 0,3 ms bis 0,6 ms durch, wobei ein bevorzugter Wert 0,34 ms beträgt.

Da die Erzeugung des Richtungs-Audiosignals 30 die Summierung des Zwischensignals 73 und des Zwischensignals 76 am Summierer 9 beinhaltet, sei darauf hingewiesen, dass die Reihenfolge von Summierung, Verzögerung und Filterung nicht festgelegt ist. Entscheidend ist nur, dass die beiden Zwischensignale 73 und 76 die Verzögerung und Filterung durchlaufen haben und das Richtungs-Audiosignal 30 der Summe der so bearbeiteten Eingangssignale entspricht.

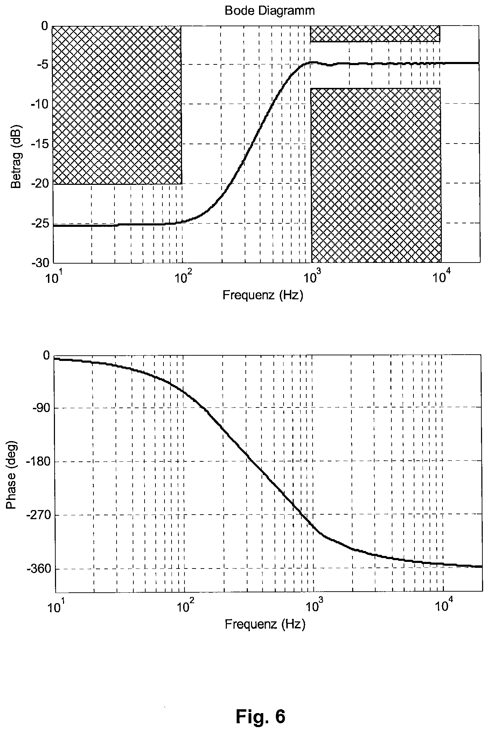

Fig. 6 zeigt den Frequenzgang eines Filters nach Betrag und Phase, welches gemäß dem ersten Ausführungsbeispiel zur Erzeugung eines Richtungs-Audiosignals für die Richtung "vorne oben links" bzw. "vorne oben rechts" dient. Der in Fig. 6 dargestellte Frequenzgang beschreibt eine Übertragungsfunktion YFH, die gleichermaßen im Filter 114 und im Filter 124 eingesetzt wird. Erfindungsgemäß erfolgt also die Erzeugung des Richtungs-Audiosignals 110 aus dem Zwischensignal 73 im Wesentlichen nach der gleichen Übertragungsfunktion wie die die Erzeugung des Richtungs-Audiosignals 120 aus dem Zwischensignal 76. Der in der oberen Hälfte von Fig. 6 über der Frequenz dargestellte Betragsverlauf zeigt, dass Frequenzen unterhalb von 100 Hz um mindestens 20 dB abgeschwächt werden. Im Frequenzbereich von 100 Hz bis 1 kHz steigt der Betrag mit steigender Frequenz an. Von 1 kHz bis 10 kHz liegt der Betrag in einem Bereich zwischen -8 dB und -2 dB. Vorzugsweise liegt der Betrag in diesem Frequenzbereich um -5 dB. Insgesamt zeigen die Filter 114 und 124 damit ein Hochpassverhalten, wobei die Eckfrequenz ca. 600 Hz beträt und im Durchlassbereich eine Abschwächung um ca. 5 dB vorgesehen ist. Der in der unteren Hälfte von Fig. 6 dargestellte Verlauf der Phase über der Frequenz, der sich für Frequenzen über 3 kHz mit steigender Frequenz dem Wert - 360° annähert, zeigt erneut, dass die Filter 114 und 124 keine dominanten Hall-Anteile enthalten.

Anzumerken ist, dass bei der Erzeugung des Richtungs-Audiosignals 110 aus dem Zwischensignal 73 kein Verzögerungsglied vorgesehen ist. Somit kann anhand einer Messung der Reaktionszeit, die vom Anlegen eines von Null verschiedenen ersten Eingangssignals 3 bis zu einer von Null verschiedenen Reaktion des Richtungs-Audiosignals 110 verstreicht, die Verzögerung D1 ermittelt werden, die vom Verzögerungsglied 4 erzeugt wird. Eine entsprechend aus dem zweiten Eingangssignal 6 und dem Richtungs-Audiosignal 120 ermittelte Verzögerung von Verzögerungsglied 7 hat erfindungsgemäß im Wesentlichen den gleichen Verzögerungswert D1. Dass nur für die beiden Richtungs-Audiosignale "vorne oben" kein eigenes Verzögerungsglied vorgesehen ist, kann anschaulich so interpretiert werden, dass den vorderen oberen Lautsprechern ihr jeweiliges Richtungs-Audiosignal stets als erstes, also vor allen anderen Lautsprechern zugeleitet wird.

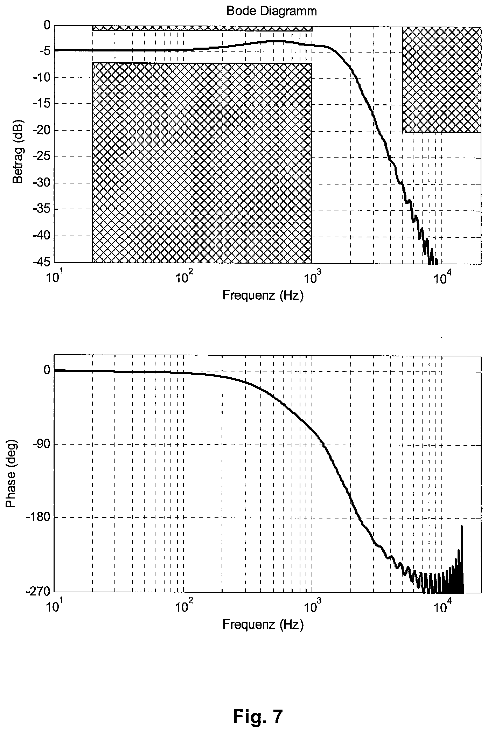

Fig. 7 zeigt den Frequenzgang eines Filters nach Betrag und Phase, welches gemäß dem ersten Ausführungsbeispiel zur Erzeugung eines Richtungs-Audiosignals für die Richtung "vorne links" bzw. "vorne rechts" dient. Der in Fig. 7 dargestellte Frequenzgang beschreibt eine Übertragungsfunktion YFN, die gleichermaßen im Filter 14 und im Filter 24 eingesetzt wird. Erfindungsgemäß erfolgt also die Erzeugung des Richtungs-Audiosignals 10 aus dem Zwischensignal 73 im Wesentlichen nach der gleichen Übertragungsfunktion wie die Erzeugung des Richtungs-Audiosignals 20 aus dem Zwischensignal 76. Gemäß dem in der oberen Hälfte von Fig. 7 über der Frequenz dargestellten Betragsverlauf befindet sich der Betrag in einem Frequenzbereich von 20 Hz bis 1 kHz in einem Bereich zwischen -7 dB und -1 dB. Vorzugsweise liegt der Betrag im Frequenzbereich bis 100 Hz um -5 dB und steigt im Frequenzbereich um 500 Hz auf einen Wert von - 3 dB an. Ab ca. 1,2 kHz fällt der Betrag mit steigender Frequenz ab und liegt ab einer Frequenz von 5 kHz unter - 20 dB. Insgesamt zeigen die Filter 14 und 24 damit ein Tiefpassverhalten, wobei die Eckfrequenz ca. 1,8 kHz beträgt und im Durchlassbereich eine Abschwächung um ca. 5 dB vorgesehen ist. Der in der unteren Hälfte von Fig. 7 dargestellte Verlauf der Phase über der Frequenz, der oberhalb einer Frequenz von 3 kHz Schwankungen über der Frequenz aufweist, deutet darauf hin, dass optional ein Hall-Anteil enthalten sein kann. Jedoch ist auch hier der Hall-Anteil nicht dominant, was sich darin niederschlägt, dass die Phase bei Frequenzen bis 10 kHz vorwiegend oberhalb von -270° liegt.

Das Verzögerungsglied 13 führt bei der Erzeugung des Richtungs-Audiosignals 10 aus dem Zwischensignal 73 eine Verzögerung DFN durch. Das Verzögerungsglied 23 führt bei der Erzeugung des Richtungs-Audiosignals 20 aus dem Zwischensignal 76 eine Verzögerung durch, die erfindungsgemäß im Wesentlichen den gleichen Verzögerungswert DFN aufweist. Der Verzögerungswert DFN liegt im Bereich von 0,3 ms bis 0,6 ms, wobei ein bevorzugter Wert 0,45 ms beträgt.

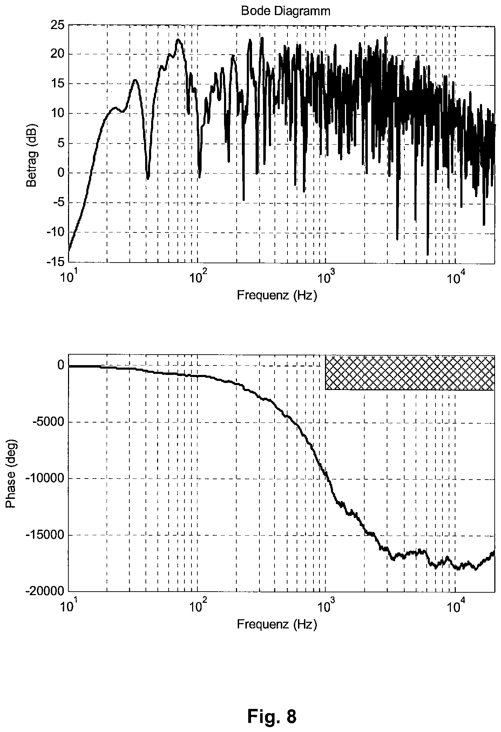

Fig. 8 zeigt den Frequenzgang eines Filters nach Betrag und Phase, welches gemäß dem ersten Ausführungsbeispiel zur Erzeugung eines Richtungs-Audiosignals für die Richtung "hinten oben links" dient. Der in Fig. 8 dargestellte Frequenzgang beschreibt eine Übertragungsfunktion YRHL, die im Filter 144 eingesetzt wird. Gemäß dem in der oberen Hälfte von Fig. 8 über der Frequenz dargestellten Betragsverlauf befindet sich der Betrag in einem Frequenzbereich von 100 Hz bis 1 kHz vorwiegend in einem Bereich zwischen -5 dB und +25 dB und weist dabei zahlreiche Maxima und Minima auf. Dies deutet auf einen dominanten Hall-Anteil hin. Da Hall durch mehrfache Verzögerung und anschließende Überlagerung der verzögerten Signale erzeugt wird, entstehen die typischen sich über der Frequenz abwechselnden teilweisen Auslöschungen und Überhöhungen des Ausgangssignals. Vorzugsweise zeigt der Betragsverlauf in einem Frequenzbereich von 100 Hz bis 1 kHz mindestens 5 Maxima und Minima über der Frequenz. Der in der unteren Hälfte von Fig. 8 dargestellte Verlauf der Phase über der Frequenz zeigt für Frequenzen über 1 kHz eine Phase unterhalb von -2000°. Auch dies ergibt sich durch den Einsatz von Hall, bei dem die verzögerten Signalanteile diesen Phasenverlauf hervorrufen.

Das Verzögerungsglied 143 führt bei der Erzeugung des Richtungs-Audiosignals 140 aus dem Zwischensignal 73 eine Verzögerung DRHL durch. Der Verzögerungswert DRHL liegt im Bereich von 1,1 ms bis 1,6 ms, wobei ein bevorzugter Wert 1,36 ms beträgt.

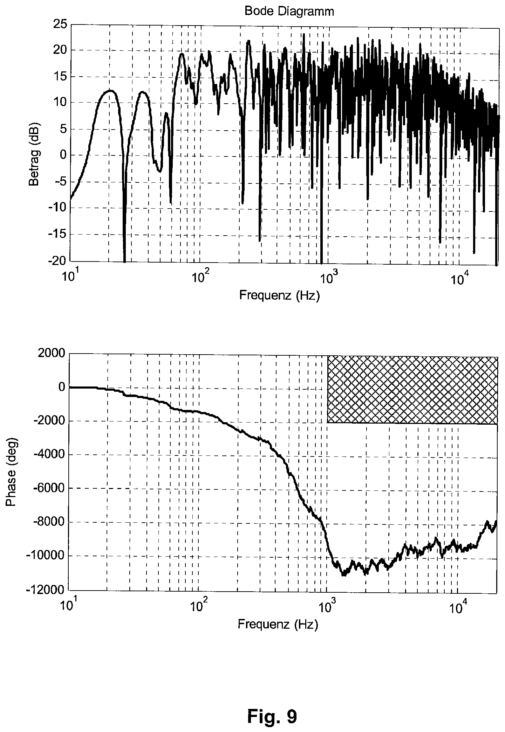

Fig. 9 zeigt den Frequenzgang eines Filters nach Betrag und Phase, welches gemäß dem ersten Ausführungsbeispiel zur Erzeugung eines Richtungs-Audiosignals für die Richtung "hinten oben rechts" dient. Der in Fig. 9 dargestellte Frequenzgang beschreibt eine Übertragungsfunktion YRHR, die im Filter 154 eingesetzt wird. Die relevanten Eigenschaften der Übertragungsfunktion YRHR entsprechen im Wesentlichen den Eigenschaften der Übertragungsfunktion YRHL, die in Filter 144 eingesetzt wird. Gemäß dem in der oberen Hälfte von Fig. 9 über der Frequenz dargestellten Betragsverlauf befindet sich der Betrag in einem Frequenzbereich von 100 Hz bis 1 kHz vorwiegend in einem Bereich zwischen -5 dB und +25 dB und weist dabei zahlreiche Maxima und Minima auf, was auf einen dominanten Hall-Anteil hindeutet. Vorzugsweise zeigt der Betragsverlauf in einem Frequenzbereich von 100 Hz bis 1 kHz mindestens 5 Maxima und Minima über der Frequenz. Der in der unteren Hälfte von Fig. 9 dargestellte Verlauf der Phase über der Frequenz zeigt für Frequenzen über 1 kHz eine Phase unterhalb von -2000°. Auch dies ergibt sich durch den Einsatz von Hall.

Das Verzögerungsglied 153 führt bei der Erzeugung des Richtungs-Audiosignals 150 aus dem Zwischensignal 76 eine Verzögerung DRHR durch. Der Verzögerungswert DRHR liegt im Bereich von 1,1 ms bis 1,6 ms, wobei ein bevorzugter Wert 1,36 ms beträgt. Der Verzögerungswert DRHR des Verzögerungsglieds 153 entspricht erfindungsgemäß im Wesentlichen dem Verzögerungswert DRHL des Verzögerungsglieds 143.

Hervorzuheben ist jedoch, dass sich die Übertragungsfunktion YRHL des Filters 144 erfindungsgemäß von der Übertragungsfunktion YRHR des Filters 154 unterscheidet. Dies liegt daran, dass hier ein Stereo-Hall zum Einsatz kommt, der den Halleffekt zwar auf beiden Seiten in ähnlicher Weise durch mehrfache Verzögerung und anschließende Überlagerung der verzögerten Signale erzeugt, sich die dabei verwendeten Verzögerungswerte für die Übertragungsfunktion YRHL aber von denen der Übertragungsfunktion YRHR unterscheiden. Das schlägt sich in den Frequenzgängen in Fig. 8 und Fig. 9 in der Form nieder, dass sich der Betrag der Übertragungsfunktionen YRHL und YRHR für einzelnen Frequenzen deutlich voneinander unterscheidet. Beispielsweise zeigt der Betrag von YRHL in Fig. 8 bei 105 Hz ein Minimum mit einer Amplitude von ca. 0 dB, während der Betrag von YRHR in Fig. 9 bei der gleichen Frequenz ein Maximum von ca. 19 dB zeigt. Vorzugsweise gibt es mindestens eine Frequenz im Bereich von 50 Hz bis 1 KHz, bei der sich der Betrag der Übertragungsfunktion YRHL um mindestens 10 dB von dem Betrag der Übertragungsfunktion YRHR unterscheidet.

Entscheidend für die Realisierung des Stereo-Halls in den Filtern 144 und 154 ist, dass sich die beiden Übertragungsfunktionen in der erläuterten Weise voneinander unterscheiden. Die konkrete Ausprägung ihrer Frequenzgänge zur Erzeugung der Richtungs-Audiosignale für die Richtungen "hinten oben links" und "hinten oben rechts" kann aber variieren. Daraus ergibt sich beispielsweise, dass der erfindungsgemäß erzeugte Hör-Effekt auch entsteht, wenn die beiden Übertragungsfunktionen YRHL und YRHR genau vertauscht verwendet werden, also die Übertragungsfunktion YRHL in Filter 154 und die Übertragungsfunktion YRHR in Filter 144 angewendet wird.

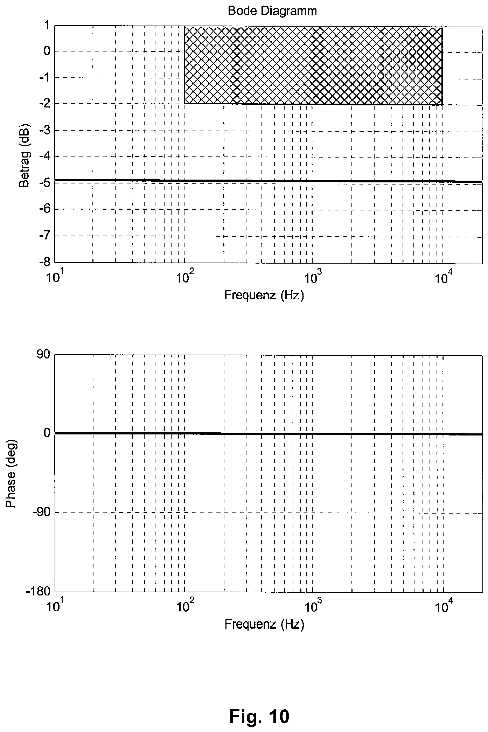

Fig. 10 zeigt den Frequenzgang eines Filters nach Betrag und Phase, welches gemäß dem ersten Ausführungsbeispiel zur Erzeugung eines Richtungs-Audiosignals für die Richtung "hinten links" bzw. "hinten rechts" dient. Der in Fig. 10 dargestellte Frequenzgang beschreibt eine Übertragungsfunktion YRN, die gleichermaßen im Filter 44 und im Filter 54 eingesetzt wird. Erfindungsgemäß erfolgt also die Erzeugung des Richtungs-Audiosignals 40 aus dem Zwischensignal 73 im Wesentlichen nach der gleichen Übertragungsfunktion wie die Erzeugung des Richtungs-Audiosignals 50 aus dem Zwischensignal 76. Gemäß dem in der oberen Hälfte von Fig. 10 über der Frequenz dargestellten Betragsverlauf liegt der Betrag der Übertragungsfunktion YRN für Frequenzen von 100 Hz bis 10 kHz zwischen -8dB und -2 dB. Bevorzugt ist in diesem Frequenzbereich eine Abschwächung des Pegels um ca. 5 dB vorgesehen. Der in der unteren Hälfte von Fig. 10 dargestellte Verlauf der Phase über der Frequenz zeigt, dass die Phase im dargestellten Frequenzbereich im Wesentlichen 0° beträgt. Eine nennenswerte Bearbeitung der Signale, die über die genannte Abschwächung hinausgeht, ist in den Filtern 44 und 54 somit erfindungsgemäß nicht notwendig.

Das Verzögerungsglied 43 führt bei der Erzeugung des Richtungs-Audiosignals 40 aus dem Zwischensignal 73 eine Verzögerung DRN durch. Das Verzögerungsglied 53 führt bei der Erzeugung des Richtungs-Audiosignals 50 aus dem Zwischensignal 76 eine Verzögerung durch, die erfindungsgemäß im Wesentlichen den gleichen Verzögerungswert DRN aufweist. Der Verzögerungswert DRN liegt im Bereich von 0,6 ms bis 1,1 ms, wobei ein bevorzugter Wert 0,95 ms beträgt.

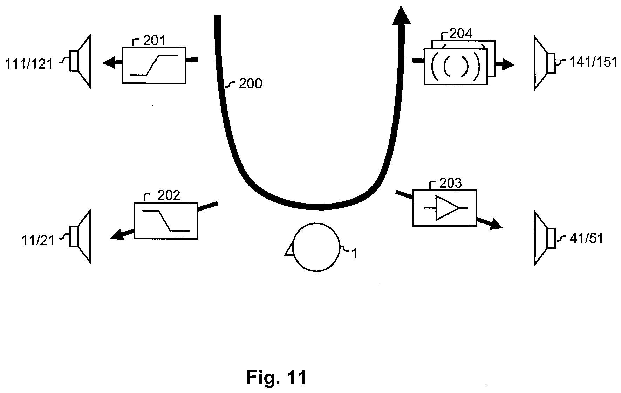

Fig. 11 zeigt eine schematische Übersicht des Ablaufs der Erzeugung der Richtungs-Audiosignale gemäß dem ersten Ausführungsbeispiel. Die Darstellung dient dazu, den oben geschilderten Ablauf in anschaulicher Form abzubilden und seine charakteristischen Eigenschaften zu visualisieren. Der Zuhörer 1 ist in diesem Falle von der Seite dargestellt, sodass seine Blickrichtung "geradeaus" in Fig. 11 in Richtung der linken Bildhälfte zeigt. Die aus Sicht des Zuhörers "vorne" befindlichen Lautsprecher 11 bzw. 21 sind daher in Fig. 11 unten links dargestellt und die aus Sicht des Zuhörers "vorne oben" befindlichen Lautsprecher 111 bzw. 121 oben links. Entsprechend sind die aus Sicht des Zuhörers "hinten" befindlichen Lautsprecher 41 bzw. 51 in Fig. 11 unten rechts dargestellt und die aus Sicht des Zuhörers "hinten oben" befindlichen Lautsprecher 141 bzw. 151 oben rechts. Für die aus Sicht des Zuhörers auf der linken Seite befindlichen Lautsprecher 11, 111, 41, und 141 wird wie in Fig. 4 gezeigt das Signal des linken Stereo-Kanals als Eingangssignal 3 verarbeitet und für die aus Sicht des Zuhörers auf der rechten Seite befindlichen Lautsprecher 21, 121, 51, und 151 entsprechend das des rechten Stereo-Kanals als Eingangssignal 6. Der in Fig. 11 gezeigte Ablauf wird dann in gleichartiger Weise für alle Elemente auf der linken und für alle Elemente auf der rechten Seite des Zuhörers ausgeführt.

Der bogenförmige Pfeil 200 stellt den zeitlichen Ablauf dar, der sich aus den Verzögerungswerten der in Fig. 4 enthaltenen Verzögerungsglieder ergibt. Das jeweilige Eingangssignal erreicht zeitlich zuerst die vorderen oberen Lautsprecher 111/121, wobei eine Hochpassfilterung 201 durchgeführt wird. Im zeitlich zweiten Schritt erreicht das Signal die vorderen Lautsprecher 11/21 auf der Höhe des Zuhörers, wobei eine Tiefpassfilterung 202 durchgeführt wird. Die zeitliche Verzögerung gegenüber dem Eintreffen des Signals an den vorderen oberen Lautsprechern 111/121 hat dabei den Wert DFN und liegt somit im Bereich von 0,3 ms bis 0,6 ms. Im zeitlich dritten Schritt erreicht das Signal die hinteren Lautsprecher 41/51 auf der Höhe des Zuhörers, wobei optional eine Anpassung 203 des Gesamtpegels vorgenommen wird. Die zeitliche Verzögerung gegenüber dem Eintreffen des Signals an den vorderen oberen Lautsprechern 111/121 hat dabei den Wert DRN und liegt somit im Bereich von 0,6 ms bis 1,1 ms. Im zeitlich vierten Schritt erreicht das Signal die hinteren oberen Lautsprecher 141/151, wobei für die rechte und die linke Seite asymmetrisch ausgeführte Halleffekte 204 zugefügt werden. Die zeitliche Verzögerung gegenüber dem Eintreffen des Signals an den vorderen oberen Lautsprechern 111/121 hat dabei den Wert DRHL bzw. DRHR und liegt somit im Bereich von 1,1 ms bis 1,6 ms.

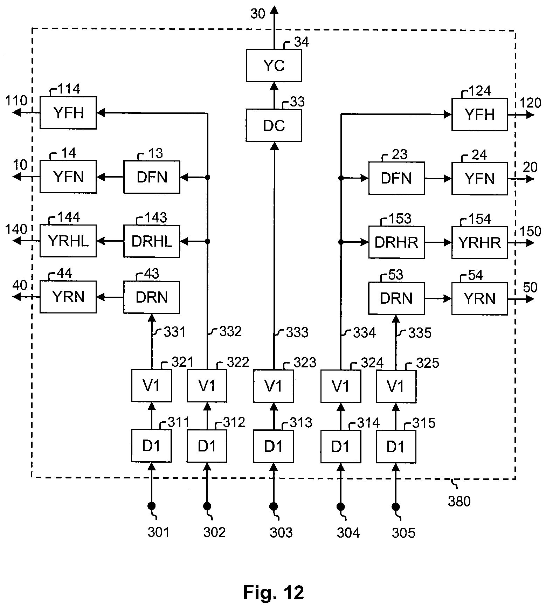

Fig. 12 zeigt das Blockschaltbild einer Anordnung zur Erzeugung der Richtungs-Audiosignale für ein 3D-Audio-Wiedergabesystem gemäß einem zweiten Ausführungsbeispiel. Als Eingangssignale dienen bei diesem zweiten Ausführungsbeispiel die 5 Kanäle eines 5.1 Surround-Signals, die bei einem solchen Signal den 5 Richtungen in der Ebene des Zuhörers zugeordnet sind. Ein erstes Eingangssignal 301 entspricht dabei dem Kanal für die Richtung "hinten links", ein zweites Eingangssignal 302 entspricht dabei dem Kanal für die Richtung "vorne links", ein drittes Eingangssignal 303 entspricht dabei dem Kanal für die Richtung "vorne mittig", ein viertes Eingangssignal 304 entspricht dabei dem Kanal für die Richtung "vorne rechts", ein fünftes Eingangssignal 305 entspricht dabei dem Kanal für die Richtung "hinten rechts". Aus diesen 5 Eingangssignalen werden die 9 Richtungs-Audiosignale 10, 20, 30, 40, 50, 110, 120, 140 und 150 erzeugt. Vorzugsweise wird der Upmix in einer Vorrichtung 380 durchgeführt, welche die verfügbaren Kanäle aus dem 2D-Audiosignal als Eingangssignale erhält und die 9 Richtungs-Audiosignale 10, 20, 30, 40, 50, 110, 120, 140 und 150 ausgibt. Die Signalverarbeitung in der Vorrichtung 380 wird vorzugsweise digital durchgeführt.

Wie bereits zum Stereo-Eingang gemäß dem ersten Ausführungsbeispiel aus Fig. 4 erläutert, können auch hier die 5 Eingangssignale 301, 302, 303, 304 und 305 optional zunächst jeweils ein Verzögerungsglied 311, 312, 313, 314 und 315 durchlaufen. Diese Verzögerungsglieder erzeugen alle eine gleiche Verzögerung D1. Außerdem können die 5 Eingangssignale optional jeweils durch Verstärkungsglieder 321, 322, 323, 324 und 325 in ihrer Amplitude verändert werden. Diese Verstärkungslieder erzeugen alle eine gleiche Verstärkung V1. Auf diese Weise werden 5 Zwischensignale 331, 332, 333, 334 und 335 erzeugt. Sowohl die Verzögerungsglieder 311, 312, 313, 314 und 315 als auch die Verstärkungsglieder 321, 322, 323, 324 und 325 sind für die Umsetzung des erfindungsgemäßen Upmix' nicht erforderlich. Da jedoch die internen Signale der Vorrichtung 380 normalerweise nicht zur Messung zur Verfügung stehen, beeinflusst das Vorhandensein dieser Glieder das Ein-/Ausgangsverhalten der Vorrichtung 380. Die im Folgenden beschriebene Signalverarbeitung ist daher so zu verstehen, dass sich eine Verzögerung D1 und eine Verstärkung V1 angeben lassen, sodass sich das erfindungsgemäß vorgesehene Übertragungsverhalten ergibt. Bevorzugt hat die Verzögerung D1 aber den Wert 0 ms und die Verstärkung V1 den Wert 1, sodass das die Zwischensignale 331, 332, 333, 334 und 335 jeweils mit einem der Eingangssignale 301, 302, 303, 304 und 305 identisch sind.

Die in Fig. 12 enthaltenen Filter 114, 14 144, 44, 34, 124, 24, 154, und 54 sind in ihrer Funktion identisch mit den entsprechenden Filtern aus Fig. 4. Auch die in Fig. 11 enthaltenen Verzögerungsglieder 13, 143, 43, 33, 23, 153 und 53 sind in ihrer Funktion identisch mit den entsprechenden Verzögerungsgliedern aus Fig. 4. Lediglich die Verteilung der hier vorhandenen 5 Eingangssignale auf die einzelnen Filter unterscheidet sich von dem ersten Ausführungsbeispiel aus Fig. 4, bei welchem nur zwei Eingangssignale zur Verfügung stehen.

Das Richtungs-Audiosignal 30 ("vorne mittig") wird gemäß dem zweiten Ausführungsbeispiel aus dem Zwischensignal 333 über ein Verzögerungsglied 33 und ein damit in Reihe angeordnetes Filter 34 erzeugt.

Das Richtungs-Audiosignal 110 ("vorne oben links") wird gemäß dem zweiten Ausführungsbeispiel aus dem Zwischensignal 332 über Filter 114 erzeugt.

Das Richtungs-Audiosignal 120 ("vorne oben rechts") wird gemäß dem zweiten Ausführungsbeispiel aus dem Zwischensignal 334 über ein Filter 124 erzeugt.

Das Richtungs-Audiosignal 10 ("vorne links") wird gemäß dem zweiten Ausführungsbeispiel aus dem Zwischensignal 332 über ein Verzögerungsglied 13 und ein damit in Reihe angeordnetes Filter 14 erzeugt.

Das Richtungs-Audiosignal 120 ("vorne rechts") wird gemäß dem zweiten Ausführungsbeispiel aus dem Zwischensignal 334 über ein Verzögerungsglied 23 und ein damit in Reihe angeordnetes Filter 24 erzeugt.

Das Richtungs-Audiosignal 140 ("hinten oben links") wird gemäß dem zweiten Ausführungsbeispiel aus dem Zwischensignal 332 über ein Verzögerungsglied 143 und ein damit in Reihe angeordnetes Filter 144 erzeugt.

Das Richtungs-Audiosignal 150 ("hinten oben rechts") wird gemäß dem zweiten Ausführungsbeispiel aus dem Zwischensignal 334 über ein Verzögerungsglied 153 und ein damit in Reihe angeordnetes Filter 154 erzeugt.

Das Richtungs-Audiosignal 40 ("hinten links") wird gemäß dem zweiten Ausführungsbeispiel aus dem Zwischensignal 331 über ein Verzögerungsglied 43 und ein damit in Reihe angeordnetes Filter 44 erzeugt.

Das Richtungs-Audiosignal 50 ("hinten rechts") wird gemäß dem zweiten Ausführungsbeispiel aus dem Zwischensignal 335 über ein Verzögerungsglied 53 und ein damit in Reihe angeordnetes Filter 54 erzeugt.

Zu beachten ist, dass das Eingangssignal 302, welches dem 5.1 Surround-Kanal "vorne links" entspricht, bei dem zweiten Ausführungsbeispiel gemäß Fig. 12 als Quelle für die drei Richtungs-Audiosignale 10 ("vorne links"), 110 ("vorne oben links") und auch (140 "hinten oben links") dient. Entsprechend dient das Eingangssignal 304, welches dem 5.1 Surround-Kanal "vorne rechts" entspricht, bei dem zweiten Ausführungsbeispiel gemäß Fig. 12 als Quelle für die drei Richtungs-Audiosignale 20 ("vorne rechts"), 120 ("vorne oben rechts") und auch 150 ("hinten oben rechts"). Die Erzeugung der 6 Richtungs-Audiosignale 10, 110, 140, 20, 120 und 150 erfolgt somit bei dem zweiten Ausführungsbeispiel genau nach dem gleichen Prinzip wie beim ersten Ausführungsbeispiel. Die drei Eingangssignale 301 "hinten links", 303 "vorne mittig" und 305 "hinten rechts" dienen jeweils ausschließlich als Quelle für die jeweiligen Richtungs-Audiosignale 40, 30 und 50, denen die jeweilige Richtung auch in der 5.1 Surround-Anordnung zugeordnet ist. Es wird aber auf alle Richtungs-Audiosignale eine Verarbeitung mit den in der Vorrichtung 380 enthaltenen Filtern und Verzögerungsgliedern angewendet.

Das beschriebene Upmix-Verfahren kann in jeglichem Umfeld eingesetzt werden, in dem eine drei-dimensionale Schallwiedergabe möglich ist. Als Anwendungsgebiete kommen somit neben heimischen Audiosystemen auch Auto, Radio, TV, Blue Ray, Studio, etc. infrage. Auch eine Nutzung beim Abspielen von Bild/Ton-Trägern, wie z.B. in DVD- oder BD-Playern ist sinnvoll. Eine Realtime-Umsetzung der o.g. Effektkombination lässt sich beispielsweise mit Hilfe von hochwertigen Computern, sowie zusätzlicher Hardware Extentions realisieren.

Gemäß einem weiteren Aspekt der vorliegenden Erfindung kann der beschriebene Upmix abhängig vom zu verarbeitenden Signal aktiviert und deaktiviert oder konfiguriert werden. Es ist beispielsweise nicht sinnvoll, dass ein Sprachsignal durch dasselbe Upmix-Verfahren bearbeitet wird wie Musik. Die in dem Musik-Upmix eingesetzten Algorithmen, sind nicht durchgehend sprachtauglich, so dass ein Nachrichtensprecher sonst ggf. zu räumlich wiedergegeben würde. Ein Gerät, welches den beschriebenen Upmix realisiert, kann somit einen Detektor enthalten, der den Unterschied zwischen Sprache und Musik detektiert und anhand des Analyseergebnisses die Aktivierung oder Deaktivierung des Upmix-Verfahrens vornimmt. Zur Analyse des Eingangssignals können Pegel-, Stereo/Mono-Detektion, sowie Filter eingesetzt werden.

Gemäß einem weiteren Aspekt der vorliegenden Erfindung ist es möglich, das Übertragungsverhalten der enthaltenen Filter in eingeschränktem Rahmen zu variieren und so unterschiedliche Upmix-Filter speziell für verschiedene Arten von Eingangssignalen zu optimieren. So können z.B. verschiedene Versionen der Filter für Rock, Klassik, Vocal etc. vorgesehen werden. Die Auswahl zwischen diesen Versionen kann entweder manuell durch den Nutzer oder durch eine Analyse des Eingangssignals oder durch die Auswertung entsprechender mit dem Signal erhaltenen Zusatzinformationen erfolgen. Sofern keine Information über die Art des Eingangssignals zur Verfügung steht, kann eine Standard-Version der Filter verwendet werden, welche jede Form von Musik und Sprache gut erfasst und die sich für die für eine Standard-Anwendung wie beispielsweise für Radio oder TV Wiedergabe eignet.

## Patentansprüche

1. Vorrichtung (80,380) zur Erzeugung von 3D-Audiosignalen aus Audio-Aufnahmen, welche für eine 2D-Audio-Wiedergabe vorgesehen sind, mit
mindestens zwei Eingängen zum Empfangen von einem ersten Eingangssignal (3, 302) und mindestens einem zweiten Eingangssignal (6, 304), und
mit mindestens neun Ausgängen zur Ausgabe von Richtungs-Audiosignalen, wobei aus Sicht eines Zuhörers (1)
ein erstes Richtungs-Audiosignal (10) der Richtung "vorne links",
ein zweites Richtungs-Audiosignal (20) der Richtung "vorne rechts",
ein drittes Richtungs-Audiosignal (30) der Richtung "vorne mittig",
ein viertes Richtungs-Audiosignal (40) der Richtung "hinten links",
ein fünftes Richtungs-Audiosignal (50) der Richtung "hinten rechts",
ein sechstes Richtungs-Audiosignal (110) der Richtung "vorne oben links",
ein siebtes Richtungs-Audiosignal (120) der Richtung "vorne oben rechts",
ein achtes Richtungs-Audiosignal (140) der Richtung "hinten oben links" und
ein neuntes Richtungs-Audiosignal (150) der Richtung "hinten oben rechts" zugeordnet ist, wobei das sechste Richtungs-Audiosignal (110) aus dem ersten Eingangssignal (3,302) durch Filterung mit einem ersten Filter (114, 201) erzeugt wird, wobei das erste Filter ein Hochpassverhalten aufweist, und dass
das erste Richtungs-Audiosignal (10) aus dem ersten Eingangssignal (3,302) durch Filterung mit einem zweiten Filter (14,202) und Verzögerung gegenüber dem sechsten Richtungs-Audiosignal (110) mit einem ersten Verzögerungsglied (13) erzeugt wird, wobei das zweite Filter ein Tiefpassverhalten aufweist, und dass
das achte Richtungs-Audiosignal (140) aus dem ersten Eingangssignal (3,302) durch Filterung mit einem dritten Filter (144, 204) und Verzögerung mit einem zweiten Verzögerungsglied (143) erzeugt wird, wobei das dritte Filter einen dominanten Hall-Anteil erzeugt und wobei das zweite Verzögerungsglied (143) eine größere Verzögerung erzeugt als das erste Verzögerungsglied (13), und dass
das siebte Richtungs-Audiosignal (120) aus dem zweiten Eingangssignal (6,304) durch Filterung mit einem vierten Filter (124, 201) erzeugt wird, wobei das vierte Filter das gleiche Übertragungsverhalten aufweist wie das erste Filter (114), und dass
das zweite Richtungs-Audiosignal (20) aus dem zweiten Eingangssignal (6,304) durch Filterung mit einem fünften Filter (24, 202) und Verzögerung gegenüber dem siebten Richtungs-Audiosignal (120) mit einem dritten Verzögerungsglied (23) erzeugt wird, wobei das fünfte Filter das gleiche Übertragungsverhalten aufweist wie das zweite Filter (14) und das dritte Verzögerungsglied (23) die gleiche Verzögerung erzeugt wie das erste Verzögerungsglied (13), und dass
das neunte Richtungs-Audiosignal (150) aus dem zweiten Eingangssignal (6,304) durch Filterung mit einem sechsten Filter (154, 204) und Verzögerung mit einem vierten Verzögerungsglied (153) erzeugt wird, wobei das sechste Filter einen dominanten Hall-Anteil erzeugt und wobei sich das Übertragungsverhalten des sechsten Filters (154) von dem Übertragungsverhalten des dritten Filters (144) unterscheidet, sodass ein Stereo-Hall entsteht und wobei das vierte Verzögerungsglied (153) die gleiche Verzögerung erzeugt wie das zweite Verzögerungsglied (143).

2. Vorrichtung nach Anspruch 1, wobei das erste Eingangssignal (3) dem Signal eines linken Stereo-Kanals entspricht und das zweite Eingangssignal (6) dem Signal eines rechten Stereo-Kanals entspricht, und wobei
das vierte Richtungs-Audiosignal (40) aus dem ersten Eingangssignal (3) durch Filterung mit einem siebten Filter (44, 203) und Verzögerung mit einem fünften Verzögerungsglied (43) erzeugt wird, und wobei
das fünfte Richtungs-Audiosignal (50) aus dem zweiten Eingangssignal (6) durch Filterung mit einem achten Filter (54, 203) und Verzögerung mit einem sechsten Verzögerungsglied (53) erzeugt wird, und wobei
das dritte Richtungs-Audiosignal (30) durch Summierung des ersten Eingangssignals (3) und des zweiten Eingangssignals (6) sowie durch Filterung mit einem neunten Filter (34) und Verzögerung mit einem siebten Verzögerungsglied (33) erzeugt wird.

3. Vorrichtung nach Anspruch 1, wobei die Vorrichtung mindestens fünf Eingänge zum Empfangen von mindestens fünf Eingangssignalen aufweist, wobei
das erste Eingangssignal (302) der Richtung "vorne links",
das zweite Eingangssignal (304) der Richtung "vorne rechts",
ein drittes Eingangssignal (303) der Richtung "vorne mittig",
ein viertes Eingangssignal (301) der Richtung "hinten links" und
ein fünftes Eingangssignal (305) der Richtung "hinten rechts" zugeordnet ist, und wobei das vierte Richtungs-Audiosignal (40) aus dem vierten Eingangssignal (301) durch Filterung mit einem siebten Filter (44, 203) und Verzögerung mit einem fünften Verzögerungsglied (43) erzeugt wird, und wobei
das fünfte Richtungs-Audiosignal (50) aus dem fünften Eingangssignal (305) durch Filterung mit einem achten Filter (54, 203) und Verzögerung mit einem sechsten Verzögerungsglied (53) erzeugt wird, und wobei
das dritte Richtungs-Audiosignal (30) aus dem dritten Eingangssignal (303) durch Filterung mit einem neunten Filter (34) und Verzögerung mit einem siebten Verzögerungsglied (33) erzeugt wird.

4. Vorrichtung nach Anspruch 2 oder 3, wobei das sechste Verzögerungsglied (53) die gleiche Verzögerung erzeugt wie das fünfte Verzögerungsglied (43) und wobei diese Verzögerung größer ist als die des ersten Verzögerungsglieds (13) aber kleiner als die des zweiten Verzögerungsglieds (143) und
wobei das das achte Filter (54) das gleiche Übertragungsverhalten aufweist wie das siebte Filter (44).

5. Vorrichtung nach Anspruch 2, 3 oder 4, wobei das fünfte Verzögerungsglied (43) und das sechste Verzögerungsglied (53) eine Verzögerung im Bereich von 0,6 ms bis 1,1 ms erzeugen.

6. Vorrichtung nach Anspruch 5, wobei das siebte Verzögerungsglied (33) eine Verzögerung im Bereich von 0,3 ms bis 0,6 ms erzeugt, und
wobei das neunte Filter (34) ein Hochpassverhalten aufweist.

7. Vorrichtung nach einem der vorherigen Ansprüche, wobei das erste Verzögerungsglied (13) und das dritte Verzögerungsglied (23) eine Verzögerung im Bereich von 0,3 ms bis 0,6 ms erzeugen, sodass das erste Richtungs-Audiosignal (10) gegenüber dem sechsten Richtungs-Audiosignal (110) sowie das zweite Richtungs-Audiosignal (20) gegenüber dem siebten Richtungs-Audiosignal (120) um diesen Betrag verzögert ausgegeben wird.

8. Vorrichtung nach einem der vorherigen Ansprüche, wobei das zweite Verzögerungsglied (143) und das vierte Verzögerungsglied (153) eine Verzögerung im Bereich von 1,1 ms bis 1,6 ms erzeugen sodass das achte Richtungs-Audiosignal (140) gegenüber dem sechsten Richtungs-Audiosignal (110) sowie das neunte Richtungs-Audiosignal (150) gegenüber dem siebten Richtungs-Audiosignal (120) um diesen Betrag verzögert ausgegeben wird.

9. Vorrichtung nach einem der vorherigen Ansprüche, wobei der Betrag des Übertragungsverhaltens des ersten Filters (114) und des vierten Filters (124) für Frequenzen unterhalb von 100 Hz unterhalb von -20 dB liegt im Frequenzbereich von 1 kHz bis 10 kHz zwischen -8 dB und -2 dB liegt.

10. Vorrichtung nach einem der vorherigen Ansprüche, wobei der Betrag des Übertragungsverhaltens des zweiten Filters (14) und des fünften Filters (24) im Frequenzbereich von 20 Hz bis 1 kHz zwischen -7 dB und -1 dB liegt und für Frequenzen oberhalb von 5 kHz unterhalb von -20 dB liegt.

11. Vorrichtung nach einem der vorherigen Ansprüche, wobei der Betrag des Übertragungsverhaltens des dritten Filters (144) und des sechsten Filters (154) im Frequenzbereich von 100 Hz bis 1 kHz vorwiegend in einem Bereich zwischen -5 dB und +25 dB liegt und in diesem Frequenzbereich eine Mehrzahl mindestens fünf Maxima und Minima über der Frequenz aufweist.

12. Vorrichtung nach einem der vorherigen Ansprüche, wobei sich der Betrag des Übertragungsverhaltens des dritten Filters (144) für mindestens eine Frequenz im Bereich von 50 Hz bis 1 KHz um mindestens 10 dB von dem Betrag des Übertragungsverhaltens des sechsten Filters (154) bei der gleichen Frequenz unterscheidet.

13. Verfahren zur Erzeugung von 3D-Audiosignalen aus Audio-Aufnahmen, welche für eine 2D-Audio-Wiedergabe vorgesehen sind, mit den Schritten:
Empfangen eines ersten Eingangssignals (3, 302) und mindestens eines zweiten Eingangssignals (6, 304), und
Ausgeben von neun Richtungs-Audiosignalen, wobei aus Sicht eines Zuhörers (1)
ein erstes Richtungs-Audiosignal (10) der Richtung "vorne links",
ein zweites Richtungs-Audiosignal (20) der Richtung "vorne rechts",
ein drittes Richtungs-Audiosignal (30) der Richtung "vorne mittig",
ein viertes Richtungs-Audiosignal (40) der Richtung "hinten links",
ein fünftes Richtungs-Audiosignal (50) der Richtung "hinten rechts",
ein sechstes Richtungs-Audiosignal (110) der Richtung "vorne oben links",
ein siebtes Richtungs-Audiosignal (120) der Richtung "vorne oben rechts",
ein achtes Richtungs-Audiosignal (140) der Richtung "hinten oben links" und
ein neuntes Richtungs-Audiosignal (150) der Richtung "hinten oben rechts" zugeordnet ist,
wobei das sechste Richtungs-Audiosignal (110) aus dem ersten Eingangssignal (3,302) durch Filterung mit einem ersten Filter (114, 201) erzeugt wird, wobei das erste Filter ein Hochpassverhalten aufweist, und
wobei das erste Richtungs-Audiosignal (10) aus dem ersten Eingangssignal (3,302) durch Filterung mit einem zweiten Filter (14, 202) und Verzögerung gegenüber dem sechsten Richtungs-Audiosignal (110) mit einem ersten Verzögerungsglied (13) erzeugt wird, wobei das zweite Filter ein Tiefpassverhalten aufweist, und
wobei das achte Richtungs-Audiosignal (140) aus dem ersten Eingangssignal (3,302) durch Filterung mit einem dritten Filter (144, 204) und Verzögerung mit einem zweiten Verzögerungsglied (143) erzeugt wird, wobei das dritte Filter einen dominanten Hall-Anteil erzeugt und wobei das zweite Verzögerungsglied (143) eine größere Verzögerung erzeugt als das erste Verzögerungsglied (13), und
wobei das siebte Richtungs-Audiosignal (120) aus dem zweiten Eingangssignal (6,304) durch Filterung mit einem vierten Filter (124, 201) erzeugt wird, wobei das vierte Filter das gleiche Übertragungsverhalten aufweist wie das erste Filter (114), und
wobei das zweite Richtungs-Audiosignal (20) aus dem zweiten Eingangssignal (6,304) durch Filterung mit einem fünften Filter (24, 202) und Verzögerung gegenüber dem siebten Richtungs-Audiosignal (120) mit einem dritten Verzögerungsglied (23) erzeugt wird, wobei das fünfte Filter das gleiche Übertragungsverhalten aufweist wie das zweite Filter (14) und das dritte Verzögerungsglied (23) die gleiche Verzögerung erzeugt wie das erste Verzögerungsglied (13), und
wobei das neunte Richtungs-Audiosignal (150) aus dem zweiten Eingangssignal (6,304) durch Filterung mit einem sechsten Filter (154, 204) und Verzögerung mit einem vierten Verzögerungsglied (153) erzeugt wird, wobei das sechste Filter einen dominanten Hall-Anteil erzeugt und wobei sich das Übertragungsverhalten des sechsten Filters (154) von dem Übertragungsverhalten des dritten Filters (144) unterscheidet, sodass ein Stereo-Hall entsteht und wobei das vierte Verzögerungsglied (153) die gleiche Verzögerung erzeugt wie das zweite Verzögerungsglied (143).

## Claims

1. A device (80, 380) for producing 3D audio signals from audio recordings intended for 2D audio playback, comprising
at least two inputs for receiving a first input signal (3, 302) and at least one second input signal (6, 304), and
at least nine outputs for the output of directional audio signals, wherein from the point of view of a listener (1)
a first directional audio signal (10) is associated with the direction "front left",
a second directional audio signal (20) is associated with the direction "front right",
a third directional audio signal (30) is associated with the direction "front center",
a fourth directional audio signal (40) is associated with the direction "rear left",
a fifth directional audio signal (50) is associated with the direction "rear right",
a sixth directional audio signal (110) is associated with the direction "front upper left",
a seventh directional audio signal (120) is associated with the direction "front upper right",
an eighth directional audio signal (140) is associated with the direction "rear upper left", and
a ninth directional audio signal (150) is associated with the direction "rear upper right", wherein
the sixth directional audio signal (110) is produced from the first input signal (3, 302) by filtering with a first filter (114, 201) wherein the first filter has a high-pass characteristic, and
the first directional audio signal (10) is produced from the first input signal (3, 302) by filtering with a second filter (14, 202) and delay with respect to the sixth directional audio signal (110) with a first delay member (13), wherein the second filter has a low-pass characteristic, and
the eighth directional audio signal (140) is produced from the first input signal (3, 302) by filtering with a third filter (144, 204) and delay with a second delay member (143), wherein the third filter produces a dominant hall component and wherein the second delay member (143) produces a greater delay than the first delay member (13), and
the seventh directional audio signal (120) is produced from the second input signal (6, 304) by filtering with a fourth filter (124, 201), wherein the fourth filter has the same transfer characteristic as the first filter (114), and
the second directional audio signal (20) is produced from the second input signal (6, 304) by filtering with a fifth filter (24, 202) and delay with respect to the seventh directional audio signal with a third delay member (23), wherein the fifth filter has the same transfer characteristic as the second filter (14) and the third delay member (23) produces the same delay as the first delay member (13), and
the ninth directional audio signal (150) is produced from the second input signal (6, 304) by filtering with a sixth filter (154, 204) and delay with a fourth delay member (153), wherein the sixth filter produces a dominant hall component and wherein the transfer characteristic of the sixth filter (154) differs from the transfer characteristic of the third filter (144) so that a stereo hall is produced and wherein the fourth delay member (153) produces the same delay as the second delay member (143).

2. A device as set forth in claim 1 wherein the first input signal (3) corresponds to the signal of a left stereo channel and the second input signal (6) corresponds to the signal of a right stereo channel, and wherein
the fourth directional audio signal (40) is produced from the first input signal (3) by filtering with a seventh filter (44, 203) and delay with a fifth delay member (43), and wherein
the fifth directional audio signal (50) is produced from the second input signal (6) by filtering with an eighth filter (54, 203) and delay with a sixth delay member (53), and wherein
the third directional audio signal (30) is produced by summing of the first input signal (3) and the second input signal (6) and by filtering with a ninth filter (34) and delay with a seventh delay member (33).

3. A device as set forth in claim 1 wherein the device has at least five inputs for receiving at least five input signals, wherein
the first input signal (302) is associated with the direction "front left",
the second input signal (304) is associated with the direction "front right",
a third input signal (303) is associated with the direction "front center",
a fourth input signal (301) is associated with the direction "rear left", and
a fifth input signal (305) is associated with the direction "rear right", and wherein the fourth directional audio signal (40) is produced from the fourth input signal (301) by filtering with a seventh filter (44, 203) and delay with a fifth delay member (43), and wherein
the fifth directional audio signal (50) is produced from the fifth input signal (305) by filtering with a eighth filter (54, 203) and delay with a sixth delay member (53), and wherein
the third directional audio signal (30) is produced from the third input signal (303) by filtering with a ninth filter (34) and delay with a seventh delay member (33).

4. A device as set forth in claim 2 or claim 3 wherein the sixth delay member (53) produces the same delay as the fifth delay member (43) and wherein said delay is greater than that of the first delay member (13) but less than that of the second delay member (143), and
wherein the eighth filter (54) has the same transfer characteristic as the seventh filter (44).

5. A device as set forth in claim 2, claim 3 or claim 4 wherein the fifth delay member (43) and the sixth delay member (53) produce a delay in the range of between 0.6 ms and 1.1 ms.

6. A device as set forth in claim 5 wherein the seventh delay member (33) produces a delay in the range of between 0.3 ms and 0.6 ms, and
wherein the ninth filter (34) has a high-pass characteristic.

7. A device as set forth in one of the preceding claims wherein the first delay member (13) and the third delay member (23) produce a delay in the range of between 0.3 ms and 0.6 ms so that the first directional audio signal (10) is output delayed by that magnitude in relation to the sixth directional audio signal (110) and the second directional audio signal (20) is output delayed by that magnitude in relation to the seventh directional audio signal (120).

8. A device as set forth in one of the preceding claims wherein the second delay member (143) and the fourth delay member (153) produce a delay in the range of between 1.1 ms and 1.6 ms so that the eighth directional audio signal (140) is output delayed by that magnitude in relation to the sixth directional audio signal (110) and the ninth directional audio signal (150) is output delayed by that magnitude in relation to the seventh directional audio signal (120).

9. A device as set forth in one of the preceding claims wherein the magnitude of the transfer characteristic of the first filter (114) and the fourth filter (124) for frequencies below 100 Hz is below -20 dB and in the frequency range of between 1 kHz and 10 kHz it is between -8 dB and -2 dB.

10. A device as set forth in one of the preceding claims wherein the magnitude of the transfer characteristic of the second filter (14) and the fifth filter (24) in the frequency range of between 20 Hz and 1 kHz is between -7 dB and -1 dB and for frequencies above 5 kHz it is below -20 dB.

11. A device as set forth in one of the preceding claims wherein the magnitude of the transfer characteristic of the third filter (144) and the sixth filter (154) in the frequency range of between 100 Hz and 1 kHz is predominantly in a range of between -5 dB and +25 dB and in that frequency range has a multiplicity of at least five maxima and minima in relation to that frequency.

12. A device as set forth in one of the preceding claims wherein the magnitude of the transfer characteristic of the third filter (144) for at least one frequency in the range of between 50 Hz and 1 kHz differs by at least 10 dB from the magnitude of the transfer characteristic of the sixth filter (154) at the same frequency.

13. Method of producing 3D audio signals from audio recordings intended for 2D audio playback, comprising the steps of:
receiving at least one first input signal (3, 302) and at least one second input signal (6, 304), and
outputting nine directional audio signals, wherein from the point of view of a listener (1)
a first directional audio signal (10) is associated with the direction "front left",
a second directional audio signal (20) is associated with the direction "front right",
a third directional audio signal (30) is associated with the direction "front centre",
a fourth directional audio signal (40) is associated with the direction "rear left",
a fifth directional audio signal (50) is associated with the direction "rear right",
a sixth directional audio signal (110) is associated with the direction "front upper left",
a seventh directional audio signal (120) is associated with the direction "front upper right",
an eight directional audio signal (140) is associated with the direction "rear upper left", and
a ninth directional audio signal (150) is associated with the direction "rear upper right",
wherein the sixth directional audio signal (110) is produced from the first input signal (3, 302) by filtering a first filter (114, 201), wherein the first filter has a high pass characteristic, and
wherein the first directional audio signal (10) is produced from the first input signal (3, 302) by filtering a second filter (14, 202) and delay with respect to the sixth directional audio signal (110) with a first delay member (13), wherein the second filter has a low pass characteristic, and
wherein the eight directional audio signal (140) is produced from the first input signal (3, 302) by filtering with a third filter (144, 204) and delay with a second delay member (143), wherein the third filter produces a dominant hall component and wherein the second delay member (143) produces a greater delay than the first delay member (13), and
wherein the seventh directional audio signal (120) is produced from the second input signal (6, 304) by filtering with a fourth filter (124, 201), wherein the fourth filter has substantially the same transfer characteristic as the first filter (114), and
wherein the second directional audios signal (20) is produced from the second input signal (6, 304) by filtering with a fifth filter (24, 202) and delay with respect to the seventh directional audio signal (120) with a third delay member (23), wherein the fifth filter has the same transfer characteristic as the second filter (14) and the third delay member (23) produces the same delay as the first delay member (13), and
wherein the ninth directional audio signal (150) is produced from the second input signal (6, 304) by filtering with a sixth filter (154, 204) and delay with a fourth delay member (153), wherein the sixth filter produces a dominant hall component and wherein the transfer characteristic of the sixth filter differs from the transfer characteristic of the third filter (144) so that a stereo hall is produced and wherein the fourth delay member (153) produces the same delay as the second delay member (143).

## Revendications

1. Dispositif (80, 380) de production de signaux audio 3D à partir d'enregistrements audio, lesquels sont prévus pour une reproduction audio 2D, avec
au moins deux entrées pour la réception d'un premier signal d'entrée (3, 302) et d'au moins un deuxième signal d'entrée (6, 304), et
avec au moins neuf sorties pour l'émission de signaux audio directionnels, dans lequel du point de vue d'un auditeur (1)
un premier signal audio directionnel (10) est associé à la direction « avant gauche »,
un deuxième signal audio directionnel (20) à la direction « avant droit »,
un troisième signal audio directionnel (30) à la direction « avant centre »,
un quatrième signal audio directionnel (40) à la direction « arrière gauche »,
un cinquième signal audio directionnel (50) à la direction « arrière droit »,
un sixième signal audio directionnel (110) à la direction « avant haut gauche »,
un septième signal audio directionnel (120) à la direction « avant haut droit »,
un huitième signal audio directionnel (140) à la direction « arrière haut gauche » et
un neuvième signal audio directionnel (150) à la direction « arrière haut droit », dans lequel
le sixième signal audio directionnel (110) est produit à partir du premier signal d'entrée (3, 302) par filtration avec un premier filtre (114, 201), dans lequel le premier filtre présente un comportement passe-haut, et que
le premier signal audio directionnel (10) est produit à partir du premier signal d'entrée (3, 302) par filtration avec un deuxième filtre (14, 202) et retard par rapport au sixième signal audio directionnel (110) avec un premier élément de retard (13), dans lequel le deuxième filtre présente un comportement passe-bas, et que
le huitième signal audio directionnel (140) est produit à partir du premier signal d'entrée (3, 302) par filtration avec un troisième filtre (144, 204) et retard avec un deuxième élément de retard (143), dans lequel le troisième filtre produit une fraction Hall dominante et dans lequel le deuxième élément de retard (143) produit un retard plus grand que le premier élément de retard (13), et que
le septième signal audio directionnel (120) est produit à partir du deuxième signal d'entrée (6, 304) par filtration avec un quatrième filtre (124, 201), dans lequel le quatrième filtre présente le même comportement de transmission que le premier filtre (114), et que
le deuxième signal audio directionnel (20) est produit à partir du deuxième signal d'entrée (6, 304) par filtration avec un cinquième filtre (24, 202) et retard par rapport au septième signal audio directionnel (120) avec un troisième élément de retard (23), dans lequel le cinquième filtre présente le même comportement de transmission que le deuxième filtre (14) et le troisième élément de retard (23) produit le même retard que le premier élément de retard (13), et que
le neuvième signal audio directionnel (150) est produit à partir du deuxième signal d'entrée (6, 304) par filtration avec un sixième filtre (154, 204) et retard avec un quatrième élément de retard (153), dans lequel le sixième filtre produit une fraction Hall dominante et dans lequel le comportement de transmission du sixième filtre (154) se différencie du comportement de transmission du troisième filtre (144), de sorte qu'un effet hall stéréo est obtenu et dans lequel le quatrième élément de retard (153) produit le même retard que le deuxième élément de retard (143).

2. Dispositif selon la revendication 1, dans lequel le premier signal d'entrée (3) correspond au signal d'un canal stéréo gauche et le deuxième signal d'entrée (6) correspond au signal d'un canal stéréo droit, et dans lequel
le quatrième signal audio directionnel (40) est produit à partir du premier signal d'entrée (3) par filtration avec un septième filtre (44, 203) et retard avec un cinquième élément de retard (43), et dans lequel
le cinquième signal audio directionnel (50) est produit à partir du deuxième signal d'entrée (6) par filtration avec un huitième filtre (54, 203) et retard avec un sixième élément de retard (53), et dans lequel
le troisième signal audio directionnel (30) est produit par addition du premier signal d'entrée (3) et du deuxième signal d'entrée (6) ainsi que par filtration avec un neuvième filtre (34) et retard avec un septième élément de retard (33).

3. Dispositif selon la revendication 1, dans lequel le dispositif présente au moins cinq entrées pour la réception d'au moins cinq signaux d'entrée, dans lequel
le premier signal d'entrée (302) est associé à la direction « avant gauche »,
le deuxième signal d'entrée (304) à la direction « avant droit »,
un troisième signal d'entrée (303) à la direction « avant centre »,
un quatrième signal d'entrée (301) à la direction « arrière gauche » et
un cinquième signal d'entrée (305) à la direction « arrière droit », et
dans lequel le quatrième signal audio directionnel (40) est produit à partir du quatrième signal d'entrée (301) par filtration avec un septième filtre (44, 203) et retard avec un cinquième élément de retard (43), et dans lequel
le cinquième signal audio directionnel (50) est produit à partir du cinquième signal d'entrée (305) par filtration avec un huitième filtre (54, 203) et retard avec un sixième élément de retard (53), et dans lequel
le troisième signal audio directionnel (30) est produit à partir du troisième signal d'entrée (303) par filtration avec un neuvième filtre (34) et retard avec un septième élément de retard (33).

4. Dispositif selon la revendication 2 ou 3, dans lequel le sixième élément de retard (53) produit le même retard que le cinquième élément de retard (43) et dans lequel ce retard est plus grand que celui du premier élément de retard (13) mais plus petit que celui du deuxième élément de retard (143) et
dans lequel le huitième filtre (54) présente le même comportement de transmission que le septième filtre (44).

5. Dispositif selon la revendication 2, 3 ou 4, dans lequel le cinquième élément de retard (43) et le sixième élément de retard (53) produisent un retard dans la plage de 0,6 ms à 1,1 ms.

6. Dispositif selon la revendication 5, dans lequel le septième élément de retard (33) produit un retard dans la plage de 0,3 ms à 0,6 ms, et
dans lequel le neuvième filtre (34) présente un comportement passe-haut.

7. Dispositif selon l'une quelconque des revendications précédentes, dans lequel le premier élément de retard (13) et le troisième élément de retard (23) produisent un retard dans la plage de 0,3 ms à 0,6 ms, de sorte que le premier signal audio directionnel (10) est émis de manière retardée de cette valeur par rapport au sixième signal audio directionnel (110), et le deuxième signal audio directionnel (20), par rapport au septième signal audio directionnel (120).

8. Dispositif selon l'une quelconque des revendications précédentes, dans lequel le deuxième élément de retard (143) et le quatrième élément de retard (153) produisent un retard dans la plage de 1,1 ms à 1,6 ms de sorte que le huitième signal audio directionnel (140) est émis de manière retardée de cette valeur par rapport au sixième signal audio directionnel (110), et le neuvième signal audio directionnel (150), par rapport au septième signal audio directionnel (120).

9. Dispositif selon l'une quelconque des revendications précédentes, dans lequel la valeur du comportement de transmission du premier filtre (114) et du quatrième filtre (124), pour des fréquences au-dessous de 100 Hz, se situe au-dessous de -20 dB, dans la plage de fréquences de 1 kHz à 10 kHz, se situe entre -8 dB et -2 dB.

10. Dispositif selon l'une quelconque des revendications précédentes, dans lequel la valeur du comportement de transmission du deuxième filtre (14) et du cinquième filtre (24) se situe, dans la plage de fréquences de 20 Hz à 1 kHz, entre -7 dB et -1 dB, et se situe, pour des fréquences au-dessus de 5 kHz, au-dessous de -20 dB.

11. Dispositif selon l'une quelconque des revendications précédentes, dans lequel la valeur du comportement de transmission du troisième filtre (144) et du sixième filtre (154) se situe, dans la plage de fréquences de 100 Hz à 1 kHz, surtout dans une plage comprise entre -5 dB et +25 dB et, dans cette plage de fréquences, présente une pluralité d'au moins cinq maxima et minima sur la fréquence.

12. Dispositif selon l'une quelconque des revendications précédentes, dans lequel la valeur du comportement de transmission du troisième filtre (144) pour au moins une fréquence dans la plage de 50 Hz à 1 KHz se différencie d'au moins 10 dB de la valeur du comportement de transmission du sixième filtre (154) à la même fréquence.

13. Procédé de production de signaux audio 3D à partir d'enregistrements audio, lesquels sont prévus pour une reproduction audio 2D, avec les étapes :
de réception d'un premier signal d'entrée (3, 302) et d'au moins un deuxième signal d'entrée (6, 304), et
d'émission de neuf signaux audio directionnels, dans lequel du point de vue d'un auditeur (1)
un premier signal audio directionnel (10) est associé à la direction « avant gauche »,
un deuxième signal audio directionnel (20) à la direction « avant droit »,
un troisième signal audio directionnel (30) à la direction « avant centre »,
un quatrième signal audio directionnel (40) à la direction « arrière gauche »,
un cinquième signal audio directionnel (50) à la direction « arrière droit »,
un sixième signal audio directionnel (110) à la direction « avant haut gauche »,
un septième signal audio directionnel (120) à la direction « avant haut droit »,
un huitième signal audio directionnel (140) à la direction « arrière haut gauche », et
un neuvième signal audio directionnel (150) à la direction « arrière haut droit »,
dans lequel le sixième signal audio directionnel (110) est produit à partir du premier signal d'entrée (3, 302) par filtration avec un premier filtre (114, 201), dans lequel le premier filtre présente un comportement passe-haut, et
dans lequel le premier signal audio directionnel (10) est produit à partir du premier signal d'entrée (3, 302) par filtration avec un deuxième filtre (14, 202) et retard par rapport au sixième signal audio directionnel (110) avec un premier élément de retard (13), dans lequel le deuxième filtre présente un comportement passe-bas, et
dans lequel le huitième signal audio directionnel (140) est produit à partir du premier signal d'entrée (3, 302) par filtration avec un troisième filtre (144, 204) et retard avec un deuxième élément de retard (143), dans lequel le troisième filtre produit une fraction Hall dominante et dans lequel le deuxième élément de retard (143) produit un retard plus grand que le premier élément de retard (13), et
dans lequel le septième signal audio directionnel (120) est produit à partir du deuxième signal d'entrée (6, 304) par filtration avec un quatrième filtre (124, 201), dans lequel le quatrième filtre présente le même comportement de transmission que le premier filtre (114), et
dans lequel le deuxième signal audio directionnel (20) est produit à partir du deuxième signal d'entrée (6, 304) par filtration avec un cinquième filtre (24, 202) et retard par rapport au septième signal audio directionnel (120) avec un troisième élément de retard (23), dans lequel le cinquième filtre présente le même comportement de transmission que le deuxième filtre (14) et le troisième élément de retard (23) produit le même retard que le premier élément de retard (13), et
dans lequel le neuvième signal audio directionnel (150) est produit à partir du deuxième signal d'entrée (6, 304) par filtration avec un sixième filtre (154, 204) et retard avec un quatrième élément de retard (153), dans lequel le sixième filtre produit une fraction Hall dominante et dans lequel le comportement de transmission du sixième filtre (154) se différencie du comportement de transmission du troisième filtre (144), de sorte qu'un effet hall stéréo est obtenu et dans lequel le quatrième élément de retard (153) produit le même retard que le deuxième élément de retard (143).
